# EUROPEAN PATENT SPECIFICATION

(11) **EP 2 100 481 B1**
(45) Date of publication and mention of the grant of the patent: **20.01.2010**
(21) Application number: 07824938.0
(22) Date of filing: 29.11.2007
(51) Int. Cl.: H05B 37/02, H05B 41/36

(54) **LIGHTING CONTROLLER**
BELEUCHTUNGSREGLER
DISPOSITIF DE COMMANDE D'ÉCLAIRAGE

(30) Priority: 05.12.2006 GB 0624326
(43) Date of publication of application: 16.09.2009
(73) Proprietor: C.p. Electronics Limited, Wembley London Greater London HA0 1RR (GB)
(72) Inventor: MANS, Paul, London Greater London HA0 1RR (GB)
(74) Representative: Wilson, Peter David George
(86) International application number: PCT/GB2007/050728
(87) International publication number: WO 2008/068528

(56) References cited:
- EP-A- 0 734 197
- WO-A-2006/033966
- US-A- 6 037 721

## Description

### Field of the Invention

This invention relates to a lighting controller.

### Background to the Invention

A variety of devices are already known for controlling the lighting systems that are ubiquitous in practically all human habitations. US 2006/125624 relates to Passive Infra Red (PIR) motion sensors for automatically controlling the lights in a room. US 4,151,426 discloses a security device that is intended to turn electrical appliances on and off automatically over a period of time in order to create the illusion of occupancy. The systems illustrated in these documents provide users with a few limited options for the control of lighting systems. However, it would be desirable to provide a lighting controller that provides a user with new possibilities for lighting control.

US-A-6 037 721 (LANSING ADAM T [US] FT AL) describes a system for individual and remote control of spaced lighting fixtures in which a plurality of spaced ceiling mounted fixtures or other controllable electrical appliances have radiation detectors mounted within each fixture and wired internally of the fixture to a dimming circuit or to a ballast. The radiation detectors have sensitivity over a wide angle and have elongated plastic radiation conduction rods which extend to or beyond the plane of the lens of the fixture to be located free of shadow effects of reflections of the fixture lens. A flexible end light fiber optics can be used in place of the acrylic rods. A narrow beam radiation transmitter selectively illuminates one of the rods or end light fiber optics without illuminating the others. The dimming circuits or ballasts within the fixtures can be further controlled by external dimmers, occupancy sensors, timeclocks, photosensors and other types of input devices.

Similarly, D2: EP-A-O 734 197 (LUTRON ELECTRONICS CO [US]) describes a plurality of spaced ceiling mounted fixtures (30) or other controllable electrical appliances have wide angle radiation detectors (22) mounted within each fixture and wired internally of the fixture to a dimming circuit (25) or to a ballast (31). The radiation detectors (22) have sensitivity over a wide angle and are fixed over a small opening in the fixture. A narrow beam radiation transmitter (40,50) selectively illuminates one of the radiation detectors (22) without illuminating the others. The dimming circuits (25) or ballasts (31) within the fixtures (30) can be further controlled by external dimmers, occupancy sensors, timeclocks, photosensors and other types of input devices.

WO 2006/033966 A (ASTRAL COMMUNICATIONS INC [US];KAZANOV ANATOLY L [US]; PAIGE ANTHONY) describes an energy savings device for an inductive, a resistive or a capacitive load, such as a fluorescent light fixture having a magnetic ballast or an electronic ballast, which is powered by an AC voltage waveform. The energy savings device includes a setting unit for setting a desired power operating level for the load. The energy savings device also includes a processor configured to receive a signal from the setting unit indicative of the desired power operating level for the load, to determine a phase delay to be provided to an output AC voltage waveform that is to be provided to the load, and to output a control signal as a result thereof. The energy savings device further includes an active element provided between a line that provides the input Ac voltage waveform and the load, the active element receiving the control signal and turning off and on at predetermined times in accordance with the control signal, so as to create the output AC voltage waveform from the AC voltage waveform.

### Summary of the Invention

This invention provides a lighting controller suitable for replacing a conventional wall-mounted light switch. The controller comprises a dimmer arranged to vary the electrical power of at least one electrical output of the controller, a light sensor responsive to the intensity of visible light incident on the light sensor, at least one manually-operable control and an occupancy sensor. The dimmer is arranged to vary the electrical power of the output in response to operation of the manually-operable control and in response to signals generated by the occupancy sensor. The dimmer is further arranged to vary the electrical power of the output by reference to signals generated by the light sensor.

The combination of a manually-operable dimmer and an occupancy sensor in a wall-mounted lighting controller provides the possibility of completely new modes of operation of the controller. For example, the controller can be arranged to raise the lighting level gradually to a desired level selected by the user when the occupancy sensor detects the presence of a person, rather than simply switching the lighting immediately to maximum brightness. This can prevent a user being blinded by the lighting as it is activated automatically.

The operation of the controller may be responsive to the current ambient lighting level. For example, the controller may be arranged to raise the output power slowly if the difference between the ambient level and the desired lighting level is large. In other words, if a room is dark, the controller may bring the lights up slowly when the occupancy sensor is triggered so as not to blind the occupant of the room, whereas in a room that is dimly lit, the controller may bring the lights up quickly when the occupancy sensor is triggered without blinding the occupant.

In a convenient arrangement, the dimmer may be configured to vary the electrical power of the output in accordance with at least two operating regimes. One of the operating regimes may be for the supply of power to incandescent lamps. Another of the operating regimes may be for the supply of power to non-incandescent lamps, such as fluorescent lamps. The controller may be configured to select an operating regime by reference to the response of the light sensor when the dimmer varies the electrical power of the output.

With this arrangement, the controller is able to determine, for example by using a test dimming cycle, whether the lamp(s) to which it is connected dim when the output power of the controller is reduced. An incandescent lamp can be dimmed by limiting the current through the lamp. However, a fluorescent lamp, which may be used as an "energy-saving" replacement for an incandescent lamp, cannot be dimmed in this way. Thus, if the controller determines that continuous variation of the output power of the dimmer does not result in continuous variation of the lighting level, the controller can select an operating regime associated with non-incandescent lamps. According to the operating regime for non-incandescent lamps, the dimmer may simply maintain the output power either at a maximum level, when the light is on, or at a minimum or zero level when the light is off.

Fluorescent lamps are available which are configured to operate at one of a plurality of lighting levels. With such lamps the desired lighting level can be selected using a traditional light switch by a predetermined sequence of on and off switching. According to the invention, an operating regime of the dimmer for non-incandescent lamps may include such predetermined switching arrangements in order to achieve a dimming effect for the non-incandescent lamp. As part of a test dimming cycle, the controller may be arranged to try a plurality of possible operating regimes until a regime results in dimming of the ambient light level.

This arrangement is, in itself, believed to be novel and thus, viewed from further aspect, the invention provides a lighting controller suitable for replacing a conventional wall-mounted light switch. The controller comprises a dimmer arranged to vary the electrical power of at least one electrical output of the controller, at least one manually-operable control, and a light sensor responsive to the intensity of visible light incident on the light sensor. The dimmer is arranged to vary the electrical power of the output in response to operation of the manually-operable control. The dimmer is configured to vary the electrical power of the output in accordance with at least two operating regimes. One of the operating regimes is for the supply of power to incandescent lamps and another of the operating regimes is for the supply of power to non-incandescent lamps. The controller is configured to select an operating regime by reference to the response of the light sensor when the dimmer varies the electrical power of the output.

In embodiments of the invention, the controller may comprise a light which is configured to illuminate when the intensity of the light detected by the light sensor is below a predetermined threshold. The controller may include a light that is activated when the electrical power of the output is below a predetermined threshold. The light provides a way of locating the controller in the dark, but ensures that power is not wasted when the lighting level is high enough to see the controller.

The controller may comprise a timer. The dimmer may be arranged to vary the electrical power of the output by reference to signals generated by the timer.

It will be seen that embodiments of the invention provide a highly flexible control device, capable of altering its output in response to the presence of a person, ambient light levels, the time of day or the time since some input, as well as manual inputs from the user.

The lighting controller is suitable for replacing a conventional wall-mounted light switch. This means that, typically, the controller will fit within a standard back box for a light switch and connect to the same electrical connections. Furthermore the lighting controller is sized to have approximately the same dimensions as a standard decorator plate for a light switch. The lighting controller may replace conventional single, double or multiple light switches.

The dimmer may be any suitable device, but in the preferred arrangement the dimmer controls the output power of the controller by limiting the amount of time within the alternating current cycle that current passes to the load.

The manually-operable control may comprise a button, slider, knob, dial, touch sensitive pad or the like. It is possible for the manually operable control to be provided on a remote control for the controller. For reasons of simplicity, however, it is preferred for a manually-operable control to be provided on the housing of the controller. In the presently preferred embodiment, the manually operable control comprises respective buttons to raise and lower the lighting level.

Typically, the occupancy sensor is a passive infra red sensor, although other suitable devices may be used.

This invention extends not only to a lighting controller, but also to a method of operating a lighting controller as described and to software for causing a general purpose lighting controller to operate in accordance with such a method.

### Brief Description of the Drawings

An embodiment of the invention will now be described, by way of example only, and with reference to the accompanying drawings, in which:
Figure 1 is a block diagram showing one embodiment of the invention connected to a lamp;
Figure 2 is a perspective view of the front of a lighting controller according to one embodiment the invention; and
Figure 3 is a perspective view of the rear of the lighting controller of Figure 2.

### Detailed Description of Exemplary Embodiments

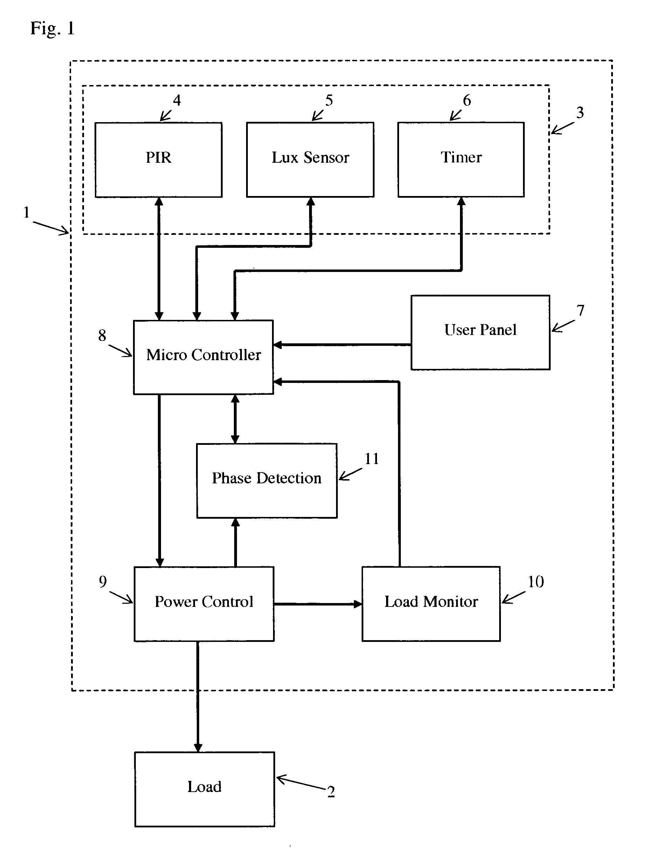

Figure 1 shows a diagram of a lighting controller 1 according to the invention connected to a load in the form of a lamp 2. The lighting controller 1 comprises a plurality of sensing modules 3. A first sensing module is a passive infra red (PIR) occupancy sensor 4 which can detect the presence of a moving hot body such as a person. A second sensing module is a light (Lux) sensor 5 which measures the intensity of light falling on the lighting controller 1. The third sensing module is a timer 6. The lighting controller 1 also has a user panel 7 on which are provide manual controls for the user. Each of the sensing modules 3 and the user panel 7 are connected to a microcontroller 8.

The microcontroller 8 is in turn connected to a power control module 9. The power control module 9 operates as a dimmer to control the power supplied to the lamp 2. Feedback to the microcontroller 8 on the power control module 9 is provided by a load monitor 10 and a phase detection module 11.

In this embodiment, the dimming method uses a switching technique based on the phase of the AC electricity supply. The current is allowed to flow when the phase ϕ has a value such that 0<ϕ<x or π<ϕ<π+x, where ϕ is measured in radians. In this case, the power transmitted to the lamp, and hence its brightness, will vary with x. When x=0, no power is transmitted, and the light is turned off. As x increases the power transmitted also increases, and the light becomes brighter. When x=π, the maximum power is transmitted and the light is at its maximum brightness. This is known as lagging edge dimming. The microcontroller 8 monitors the phase ϕ of the AC electricity supply by means of the phase detection module 11 and controls the power control 9 accordingly.

The lighting controller operates on power taken from the AC electricity supply. Therefore x<π even when the lighting controller is set to provide maximum brightness, since some of the power is diverted to supply the lighting controller itself.

If the load monitor 10 detects that the current or the voltage of the AC electricity supply exceeds a predetermined safety threshold, the lighting controller 1 will shut down in order to protect the components. The lighting controller 1 also detects the operation of circuit protection devices such as circuit breakers and fuses, and will respond by shutting itself down.

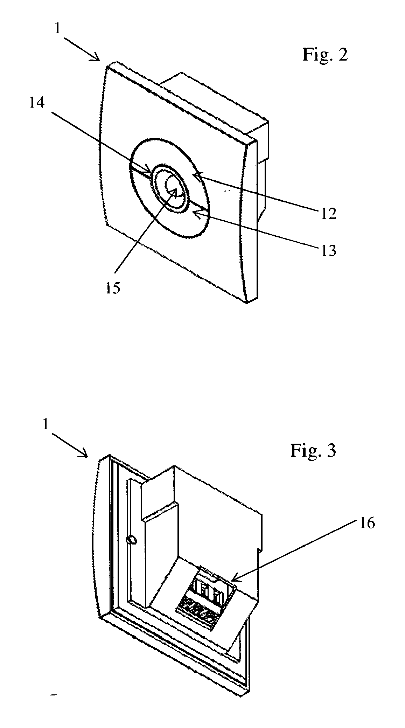

The lighting controller 1 is contained within a single unit, as illustrated in Figures 2 and 3. This unit is the correct size and shape to fit in the recess provided for a standard light switch, so that it can be fitted quickly and easily.

The front plate provides an on/up button 12 and an off/down button 13 for manually controlling the lighting levels in a room. The controller 1 also comprises a ring of LEDs 14 that are activated when light levels are low so that the switch can be located in the dark. The Lux sensor 5 is situated behind this ring 14. A Fresnel PIR lens 15 is provided to the PIR sensor 4. At the rear, the lighting controller offers a slot 16 with connectors for the necessary electrical cables.

The lighting controller can also be operated with a remote control using an infrared transmitter in a separate handset and an infrared receiver behind the ring 14.

In operation, a short press of the off/down button 13 causes the lamp 2 to turn off. A short press of the up/on button causes the lamp 2 to turn on.

In contrast, pressing and holding the on/up button 12 causes the lamp 2 to brighten gradually, while pressing and holding the off/down button 13 causes the lamp 2 to dim gradually. The lighting controller 1 remains in dim mode for approximately half a second after a long press of either button. In dim mode, a short press of either button 12 or 13 causes the lamp 2 to become slightly brighter or slightly dimmer, instead of turning on and off. This allows fine adjustments to be made to the brightness level of the lamp 2.

The brightness of the LEDs 14 can also be adjusted by pressing and holding the off/down button 13 while the lamp 2 is turned off. After 3 seconds, the LED brightness will begin to vary cyclically, from the dimmest setting to the brightest and back again. Releasing the button at the desired level of brightness causes the lighting controller to maintain the LEDs at that level whenever they are activated.

The rate at which the brightness of the lamp 2 is increased is partly dependent on the Lux levels, as measured by the light sensor 5. If the lights are turned on when it is dark, they brighten more slowly so that any people present will have time to adjust and not be blinded by the glare.

The remote control (not shown) is also provided with an on/up button and an off/down button, which function in the same way as the buttons 12 and 13 on the lighting controller 1. The remote control is also provided with controls to switch between the modes of operation.

The lighting controller has various modes of operation, between which the user may select to suit their needs. If the user simply wishes the lights to turn on when they enter a room and turn off when they leave, this is provided for by a presence detection mode. In an absence detection mode, the light can be manually turned on, but automatically turns itself off when the occupancy sensor indicates that the room is unoccupied. In maintained luminance mode the lighting controller 1 adjusts the output in order to maintain a constant Lux level. In this mode, the lights are dimmed and brightened slowly. This prevents the lighting controller from responding precipitously when, for example, somebody walks in front of the lighting controller. In night light mode, the controller does not switch off when it otherwise would; instead it goes to a minimum brightness level. In security mode, the lights turn on and off at various times in order to simulate occupation in an empty room. This last mode can function in a variety of different ways. The lights can turn on and off at set times in response to the timer, or they can be operated at random. They can also be configured to come on for a predetermined length of time at dusk, in response to the falling light levels.

In presence and absence detection modes, the time-out of the lighting controller 1, that is the time between the occupancy sensor 4 last detecting a presence and the lamp 2 being turned off, can be varied. The time-out period can be set in a range from 30 seconds to 30 minutes. A time-out of 30 seconds is most useful in locations where people are unlikely to spend much time stationary, such as a corridor. A time-out of 30 minutes is most useful in locations like living rooms, where people may very well remain still for an extended period of time.

A further mode of operation is night mode. In this mode, if a person is detected by the lighting controller 1 in the dark, the lighting controller 1 will turn on the light, but only at a low setting. In this way, a person in a darkened house late at night can automatically be provided with enough light to see where they are going without the light becoming so bright as to cause the person discomfort or disturb others who may be sleeping. Depending upon the needs of the user, this mode may be enabled at certain times of day, or after a minimum period of inactivity, or when the light levels are below a minimum level when the person is detected. The controller may maintain the light at a low level until the user manually increases the brightness, or may increase the light level if the occupancy sensor 4 continues to detect the presence of a person.

Not all light sources are capable of dimming. To prevent wasting of energy, the lighting controller 1 is configured to carry out a diagnostic test, either automatically when first connected or when instructed by the user. During the test the lighting controller 1 varies the output power and compares the changing power with any change in the light level detected by the light sensor 5. The lighting controller 1 is then able to select a mode of operation based on the results of this test. If there is a roughly linear change in light levels between minimum output power and maximum output power, the lighting controller I determines that the lamp is an incandescent filament lamp and will operate in a dimming mode. However, if there is only a sudden switch between light levels at a certain level of power output, the lighting controller determines that the lamp is of a type that is not capable of dimming, such as a fluorescent lamp. Therefore the lighting controller 1 subsequently operates in a mode whereby it only acts as a switch, and not a continuous dimmer. If there are no changes in light level at all, or if any changes are not clearly related to the changes in light output power, this indicates that either the lighting controller is not within sight of the light it is controlling or that the light is in need of replacement or repair.

This testing cycle allows the system to detect more complex lighting devices as well, such as fluorescent lamps that are capable of operating at a number of discrete light levels. The operating mode of the lighting controller 1 can then be selected to control these types of lamp as well.

The embodiments described above use lagging edge dimming. The same equipment can also dim using leading edge dimming, where the current is only allowed to flow when the phase ϕ has a value such that π-x<ϕ<π or 2π-x<ϕ<2π.

In summary, a device for replacing conventional wall mounted light switches in situ comprises a dimmer (1) and an occupancy sensor (4). These are arranged such that the electrical power of at least one output (2) can be varied manually and in response to signals generated by the occupancy sensor.

## Claims

1. A lighting controller suitable for replacing a conventional wall-mounted light switch, the controller comprising:
a dimmer arranged to vary the electrical power of at least one electrical output of the controller;
a light sensor responsive to the intensity of visible light incident on the light sensor;
at least one manually-operable control; and
an occupancy sensor,
wherein the dimmer is arranged to vary the electrical power of the output in response to operation of the manually-operable control and in response to signals generated by the occupancy sensor and the dimmer is further arranged to vary the electrical power of the output by reference to signals generated by the light sensor,
**characterised in that** the lighting controller is selectively operable in a first mode of operation wherein the dimmer supplies electrical power to the electrical output of the controller in response to the presence of a user as detected by the occupancy sensor, a second mode of operation wherein the dimmer supplies electrical power to the electrical output of the controller in response to the user operating a manually-operable control, and in both the first and second mode of operation, the dimmer ceases supplying electrical power to the electrical output of the controller in response to the absence of a user as detected by the occupancy sensor.

2. A controller as claimed in claim 1, wherein the dimmer is configured to vary the electrical power of the output in accordance with at least two operating regimes, one of the operating regimes being for the supply of power to incandescent lamps and another of the operating regimes being for the supply of power to non-incandescent lamps, and
wherein the controller is configured to select an operating regime by reference to the response of the light sensor when the dimmer varies the electrical power of the output.

3. A controller as claimed in claim 1 or claim 2, comprising a light configured to illuminate when the intensity of the light detected by the light sensor is below a predetermined threshold.

4. A controller as claimed in any preceding claim comprising a timer, wherein the dimmer is further arranged to vary the electrical power of the output by reference to signals generated by the timer.

## Patentansprüche

1. Beleuchtungsregler, der als Ersatz eines herkömmlichen Wandlichtschalters geeignet ist, wobei der Regler Folgendes umfasst:
einen Helligkeitsregler, der so angeordnet ist, dass er den elektrischen Strom mindestens eines elektrischen Ausgangs des Reglers variiert;
einen Lichtsensor, der auf die Intensität von sichtbarem Licht reagiert, das auf den Lichtsensor einfällt;
mindestens einen Handregler; und
einen Belegungssensor,
wobei der Helligkeitsregler so ausgelegt ist, dass er den elektrischen Strom des Ausgangs als Reaktion auf die Bedienung des Handreglers und als Reaktion auf Signale, die von dem Belegungssensor erzeugt werden, variiert, und der Helligkeitsregler des Weiteren so ausgelegt ist, dass er den elektrischen Strom des Ausgangs unter Bezugnahme auf Signale, die von dem Lichtsensor erzeugt werden, variiert,
**dadurch gekennzeichnet, dass** der Beleuchtungsregler in einem ersten Betriebsmodus selektiv bedient werden kann, bei dem der Helligkeitsregler als Reaktion auf das Vorhandensein eines Benutzers, der von dem Belegungssensor erfasst wird, elektrischen Strom an den elektrischen Ausgang des Reglers anlegt, der Beleuchtungsregler in einem zweiten Betriebsmodus selektiv bedient werden kann, bei dem der Helligkeitsregler als Reaktion darauf, dass der Benutzer einen Handregler bedient, elektrischen Strom an den elektrischen Ausgang des Reglers anlegt, und der Helligkeitsregler sowohl im ersten als auch im zweiten Betriebsmodus als Reaktion auf die Abwesenheit eines Benutzers, die von dem Belegungssensor erfasst wird, die Zuführung von elektrischem Strom an den elektrischen Ausgang des Reglers unterbricht.

2. Regler nach Anspruch 1, wobei der Helligkeitsregler so konfiguriert ist, dass er den elektrischen Strom des Ausgangs gemäß mindestens zweier Regelungsschemen variiert, wobei eines der Regelungsschemen zur Speisung von Glühlampen und ein anderes der Regelungsschemen zur Speisung von nichtglühenden Lampen dient, und
wobei der Regler so konfiguriert ist, dass er unter Bezugnahme auf die Reaktion des Lichtsensors ein Regelungsschema auswählt, wenn der Helligkeitsregler den elektrischen Strom des Ausgangs variiert.

3. Regler nach Anspruch 1 oder Anspruch 2, der eine Lampe umfasst, die so konfiguriert ist, dass sie leuchtet, wenn die Intensität des Lichts, das von dem Lichtsensor erfasst wird, unterhalb eines vorherbestimmten Schwellenwerts liegt.

4. Regler nach einem der vorhergehenden Ansprüche, der einen Zeitgeber umfasst, wobei der Helligkeitsregler des Weiteren so ausgelegt ist, dass er den elektrischen Strom des Ausgangs unter Bezugnahme auf Signale, die von dem Zeitgeber erzeugt werden, variiert.

## Revendications

1. Un dispositif de commande d'éclairage adapté au remplacement d'un interrupteur de lumière mural classique, le dispositif de commande comprenant :
un gradateur d'éclairage agencé de façon à varier le courant électrique d'au moins une sortie électrique du dispositif de commande,
un capteur de lumière réactif à l'intensité d'une lumière visible incidente sur le capteur de lumière,
au moins une commande manuelle, et
un détecteur de présence,
où le gradateur d'éclairage est agencé de façon à varier le courant électrique de la sortie en réponse à l'actionnement de la commande manuelle et en réponse à des signaux générés par le détecteur de présence, et où le gradateur d'éclairage est agencé en outre de façon à varier le courant électrique de la sortie en référence à des signaux générés par le capteur de lumière,
**caractérisé en ce que** le dispositif de commande d'éclairage est actionnable de manière sélective dans un premier mode de fonctionnement où le gradateur de lumière fournit du courant électrique à la sortie électrique du dispositif de commande en réponse à la présence d'un utilisateur détecté par le capteur de présence, un deuxième mode de fonctionnement où le gradateur de lumière fournit du courant électrique à la sortie électrique du dispositif de commande en réponse à l'utilisateur actionnant un dispositif de commande manuel, et, aussi bien dans le premier que le deuxième mode de fonctionnement, le gradateur de lumière cesse de fournir du courant électrique à la sortie électrique du dispositif de commande en réponse à l'absence de détection d'un utilisateur par le capteur de présence.

2. Un dispositif de commande selon la Revendication 1, où le gradateur d'éclairage est configuré de façon à varier le courant électrique de la sortie conformément à au moins deux régimes de fonctionnement, l'un des régimes de fonctionnement étant destiné à la fourniture de courant à des lampes à incandescence et un autre des régimes de fonctionnement étant destiné à la fourniture de courant à des lampes non incandescentes, et où le dispositif de commande est configuré de façon à sélectionner un régime de fonctionnement en référence à la réponse du capteur de lumière lorsque le gradateur d'éclairage varie le courant électrique de la sortie.

3. Un dispositif de commande selon la Revendication 1 ou 2, comprenant un éclairage configuré de façon à éclairer lorsque l'intensité de la lumière détectée par le capteur de lumière est inférieure à un seuil prédéterminée.

4. Un dispositif de commande selon l'une quelconque des Revendications précédentes comprenant une minuterie, où le gradateur d'éclairage est agencé en outre de façon à varier le courant électrique de la sortie en référence à des signaux générés par la minuterie.
